# EUROPEAN PATENT APPLICATION

(11) **EP 1 908 630 A2**
(43) Date of publication of application: **09.04.2008**
(21) Application number: 07253679.0
(22) Date of filing: 17.09.2007
(51) Int. Cl.: B60Q 1/00, B62J 6/02, B62J 6/00

(54) **Headlight apparatus and vehice**

(30) Priority: 29.09.2006 JP 2006269999
(71) Applicant: Yamaha Hatsudoki Kabushiki Kaisha, Iwata-shi, Shizuoka 438-8501 (JP)
(72) Inventor: Aoki, Yashushi, Samutprakarn 10540 (TH)
(74) Representative: Lamb, Martin John Carstairs

(57) **Abstract**

A headlight unit 110 includes a flasher bulb 230L, 230R that flashes at predetermined intervals, and a flasher lens 122L, 122R. The headlight unit 110 has a louver 160L, 160R that partitions the flasher lens 122L, 122R. The louver 160L, 160R is disposed on an inner surface of the flasher lens 122L, 122R.

## Description

### FIELD OF THE INVENTION

The present invention relates to a headlight apparatus having a headlight and a directional indicator, and to a vehicle having the headlight apparatus.

### BACKGROUND TO THE INVENTION

A headlight apparatus is provided in a vehicle, such as a motorcycle, at a front portion; e.g., in front of a handlebar, of the vehicle.

Known configurations of the headlight apparatus described above include a configuration in which a directional indicator, or a flasher lamp, is disposed on each of outer sides of a headlight to indicate an intended traveling direction of the vehicle. Such a configuration is disclosed in, for example, JP-Y-2547379.

A flasher lamp of this type generally has a flasher bulb that flashes at predetermined intervals and a flasher lens disposed forward of the flasher bulb. Predetermined projections and depressions are formed on an inner surface of the flasher lens to adjust the luminous energy and a traveling direction of light emitted from the flasher bulb.

However, the aforementioned conventional headlight apparatus involves the following problem. That is, the flasher lens should be thicker than a predetermined thickness to allow the predetermined projections and depressions and the like to be formed on the inner surface thereof. This imposes a limitation to an extent of reduction of the flasher lens in thickness to attain weight reduction of the headlight apparatus, which is a problem.

Furthermore, the process of forming the predetermined projections and depressions on the inner surface of the flasher lens is complicated and increases manufacturing cost of the headlight apparatus, which poses another problem.

The present invention has been conceived in view of the above circumstances, and aims at providing a headlight apparatus that allows adjustment of luminous energy and a traveling direction of light emitted from a flasher bulb without applying a work on an inner surface of a flasher lens, and a vehicle having the headlight apparatus.

### SUMMARY OF THE INVENTION

According to a first aspect of the present invention there is provided a headlight apparatus comprising a directional indicator including:
a light source adapted to flash;
a directional indicator lens disposed forward of the light source; and
a partition for partitioning the directional indicator lens, wherein the partition is disposed on an inner surface of the directional indicator lens.

The headlight apparatus may further comprise a headlight.

The light source may be adapted to flash at a predetermined intervals.

According to the headlight apparatus, the partition that partitions the directional indicator lens may be disposed on the inner surface of the directional indicator lens. Hence, the partition may adjust the luminous energy and a traveling direction of light emitted from the light source.

In other words, the headlight apparatus attains adjustment of the luminous energy and the traveling direction of the light emitted from the light source without applying a work on the inner surface of the directional indicator lens.

The directional indicator may be adjacent to the headlight. The headlight may have a headlight lens and the directional indicator lens and the headlight lens may be formed in one unit.

The partition may have a plate portion having a geometry of a substantially flat plate. The partition may have a plurality of plate portions. The partition may further have an outer frame portion that supports the plate portion.

An optical axis of the light source may be oriented to extend obliquely forwardly from the vehicle while the headlight apparatus is attached to the vehicle.

The headlight apparatus may comprise first and second directional indicators adapted to be positioned on respective right and left sides of a vehicle in a vehicle width direction.

According to a second aspect of the invention, there is provided a headlight apparatus that has a headlight and a directional indicator. The directional indicator includes a light source that flashes at predetermined intervals, and a directional indicator lens disposed forward of the light source, and is provided with a partition that partitions the directional indicator lens. The partition is disposed on an inner surface of the directional indicator lens.

According to a third aspect of the present invention, there is provided a vehicle comprising a headlight apparatus according to any one of the first and second aspects.

According to the present invention, a headlight apparatus that allows adjustment of the luminous energy and a traveling direction of light emitted from a flasher bulb without applying a machining on an inner surface of a flasher lens, and a vehicle having the headlight apparatus are provided.

### BRIEF DESCRIPTION OF THE DRAWINGS

These and other aspects of the present invention will now be described, by way of example only, with reference to the accompanying drawings, in which:
FIG. 1 is a left side view of a motorcycle according to an embodiment of the present invention;
FIG. 2 is a front view of a handlebar assembly including a headlight unit according to the embodiment of the present invention;
FIG. 3 is an exploded perspective view of the headlight apparatus according to the embodiment of the present invention;
FIG. 4 is a plan view of the headlight apparatus according to the embodiment of the present invention; and
FIG. 5 is a cross-sectional view taken along line F5-F5 of FIG. 4.

### DETAILED DESCRIPTION OF THE DRAWINGS

An embodiment of a vehicle according to the present invention will now be described with reference to the drawings. In the following descriptions in regard to the drawings, identical or similar parts are denoted by the identical or similar reference numerals. It should be noted that each drawing is a schematic diagram, and may represent different dimensional ratios and the like from those of the actual apparatus. Hence, specific dimensions and the like should be determined in consideration of the following descriptions. Furthermore, as a matter of course, different drawings include elements which have different dimensional relations and ratios.

### (1) General Configuration

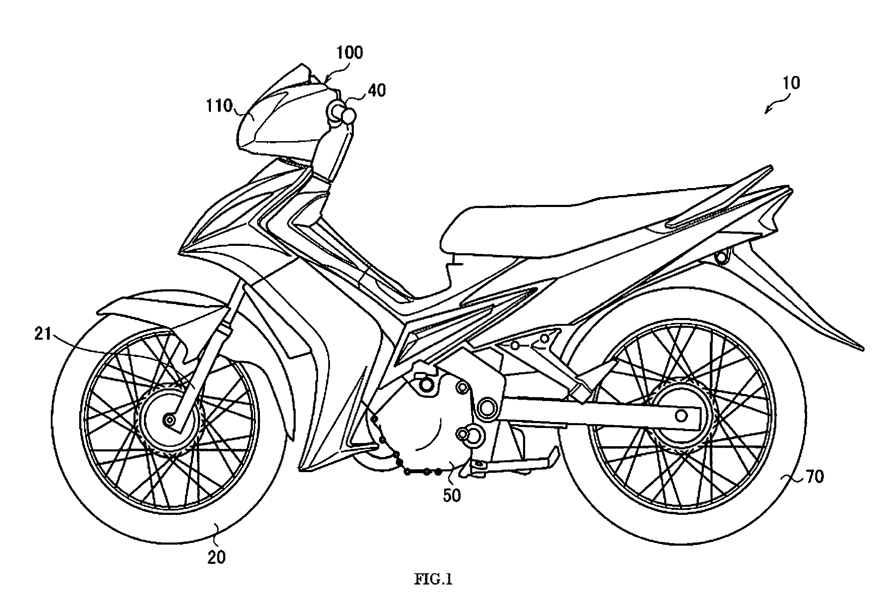

FIG. 1 is a left side view of a motorcycle 10, which is a vehicle according to this embodiment. As shown in FIG. 1, the motorcycle 10 is a so-called underbone-type motorcycle having a body frame (not shown) disposed at a lower position as compared with that of a general straddle-type motorcycle.

The motorcycle 10 has a front wheel 20 and a rear wheel 70, and drives the rear wheel 70 with a driving force generated by an engine 50.

The motorcycle 10 has a pair of left and right front forks 21 that rotatably support the front wheel 20. Specifically, the front forks 21 move (in a linear motion) the front wheel 20 vertically (in practice, in the direction along which a predetermined caster angle is provided) in accordance with a change in a road condition, to thereby absorb shocks received on the front wheel 20.

A handlebar assembly 100 is disposed above the front forks 21. The handlebar assembly 100 includes a handlebar 40 to be manipulated by a rider to steer the front wheel 20, and a headlight unit 110.

### (2) Configuration of Headlight apparatus

The configuration of the headlight unit 110 that forms the headlight apparatus in this embodiment will now be described.

### (2. 1) Overall Configuration

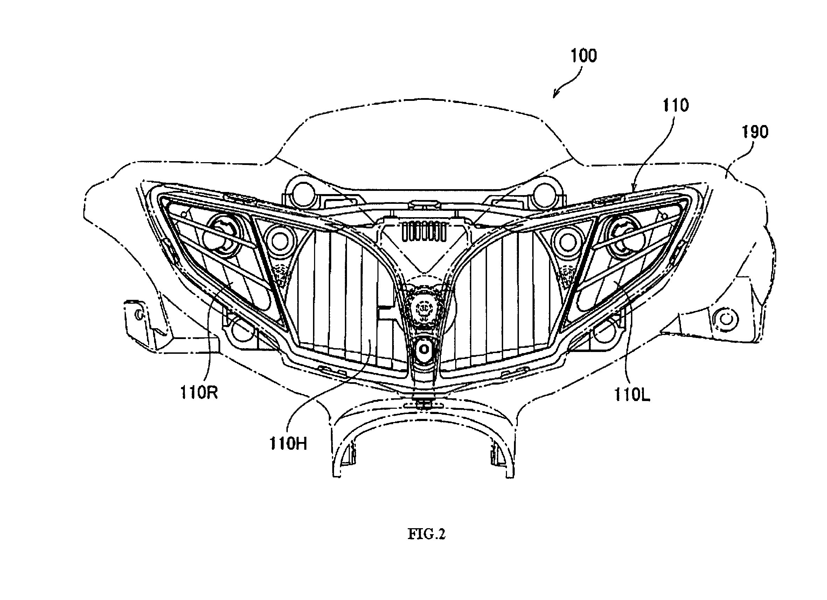

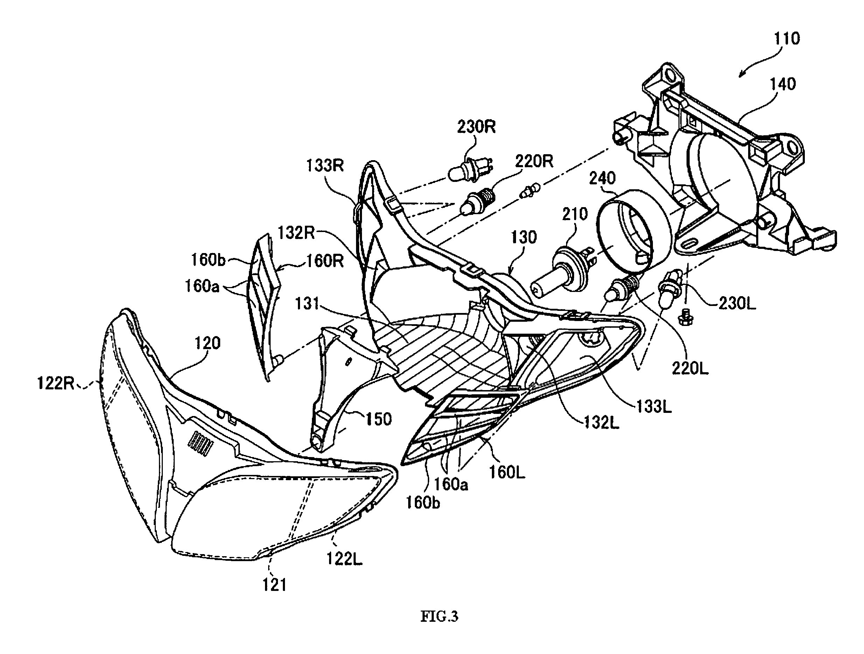

FIG. 2 is a front view of the handlebar assembly 100 including the headlight unit 110. FIG. 3 is an exploded perspective view of the headlight unit 110.

As shown in FIG. 2, the handlebar assembly 100 has the headlight unit 110 and a handlebar cover 190 that surrounds the headlight unit 110.

The headlight unit 110 includes a headlight section 110H and left and right flasher sections 110L, 110R. The flasher sections 110L, 110R in this embodiment form directional indicators. The flasher sections 110L, 110R are adjacent to the headlight section 110H.

The headlight unit 110 has a headlight lens 121 (not shown in FIG. 2; see FIG. 3). The flasher sections 110L, 110R have respective flasher lenses 122L, 122R (not shown in FIG. 2; see FIG. 3).

As shown in FIG. 3, the headlight unit 110 has a front lens 120, a headlight body 130, and a headlight bracket 140.

The front lens 120 is made of a transparent synthetic resin and is formed with the headlight lens 121 and flasher lenses 122L, 122R. Specifically, the headlight lens 121 and the flasher lenses 122L, 122R are formed in one unit.

The headlight lens 121 is disposed forward of a headlight bulb 210. Each flasher lens 122L, 122R is disposed forward of a respective flasher bulb 230L, 230R. Each flasher lens 122L, 122R in this embodiment forms a directional indicator lens. Each flasher bulb 230L, 230R in this embodiment forms light sources.

The headlight body 130 includes a headlight reflector 131, left and right position lamp reflectors 132L, 132R, and left and right flasher reflectors 133L, 133R.

The headlight reflector 131 reflects light emitted from the headlight bulb 210 attached to the reflector 131.

Each position lamp reflector 132L, 132R reflects light emitted from a respective position lamp 220L, 220R attached thereto.

The position lamps 220L, 220R permit other vehicles and the like to recognize the position of the motorcycle 10. The luminous energy of the position lamps 220L, 220R is lower than the luminous energy of the headlight bulb 210. The reflectors 132L, 132R and position lamps 220L, 220R are placed on the outside of the reflector 131 and the headlight bulb 210.

Each flasher reflector 133L, 133R reflects light emitted from a respective flasher bulb 230L, 230R attached thereto.

When a traveling direction change is intended, one of the flasher bulbs 230L, 230R flashes at predetermined intervals to indicate the intended traveling direction of the motorcycle 10; specifically, one of right and left directions. The flasher bulbs 230L, 230R are attached to a respective reflector 133L, 133R provided on the outside of the position lamp reflectors 132L, 132R. The flasher reflectors 133L, 133R and the flasher bulbs 230L, 230R are disposed on the outside of the position reflectors 132L 132R and the position lamps 220L, 220R.

The headlight bracket 140 supports the front lens 120 and the headlight body 130 and permits these supported components to be moved vertically; that is, to be capable of adjusted for aiming. In addition, the headlight bracket 140 is fixed to the handlebar cover 190.

A light-shielding wall 150 is disposed between the front lens 120 and the headlight body 130. A louver 160L is disposed to the left side of the light-shielding wall 150. A louver 160R is disposed to the right side of the light-shielding wall 150.

The light-shielding wall 150 shields light emitted from the headlight bulb 210 and light reflected from the reflector 131. The light-shielding wall 150 is disposed between the front lens 120 and the reflector 131. The light-shielding wall 150 is disposed between the front lens 120 and the headlight bulb 210.

The louvers 160L, 160R partition respective flasher lenses 122L, 122R. The louvers 160L, 160R of this embodiment form partitions. Each louver 160L, 160R is formed of a material (an opaque resin) that can shield light emitted from the flasher bulbs 230L, 230R.

The louvers 160L, 160R have plate portions 160a each having the geometry of a substantially flat plate. Specifically, each louver 160L, 160R has two plate portions 160a. The louvers 160L, 160R also have an outer frame portion 160b that supports the two plate portions 160a.

In this embodiment, the plate portions 160a are disposed along the longitudinal direction of the headlight unit 110; that is, along the widthwise direction of the vehicle.

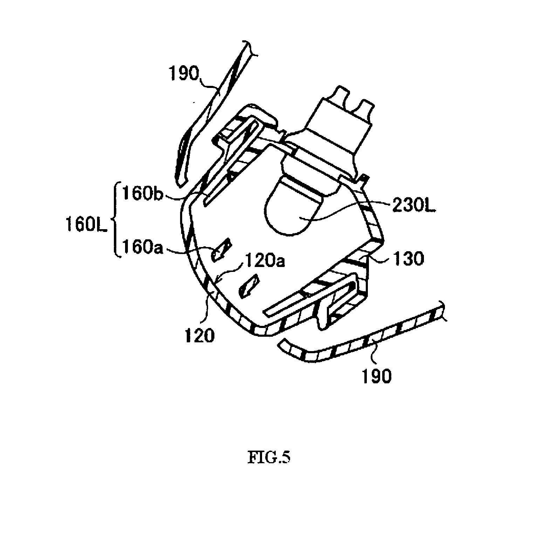

The louvers 160L, 160R are disposed between the front lens 120 and the headlight body 130. Specifically, each louver 160L, 160R is disposed between a respective flasher lens 122L, 122R and respective reflectors 133L, 133R. More specifically, each louver 160L, 160R is disposed on an inner surface 120a (not shown in FIG. 3; see FIG. 5) of a respective flasher lens 122L, 122R.

A socket cover 240 that covers a base (not shown) of the headlight bulb 210 is attached to the rear of the headlight body 130.

### (2. 2) Arrangement of Partition and Light Source

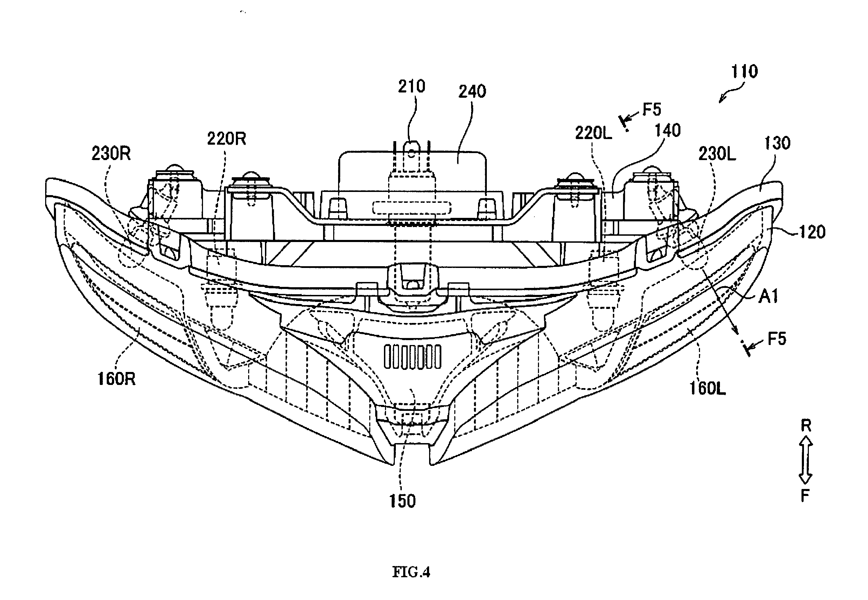

Next, referring to FIGs. 4 and 5, arrangement of the louvers 160L, 160R that form the partitions in this embodiment, and the flasher bulbs 230L, 230R that form light sources in this embodiment will be described.

As shown in FIG. 4, an optical axis A1 of the left flasher bulb 230L is oriented to extend obliquely forwardly from the motorcycle 10 while the headlight unit 110 is attached to the motorcycle 10. The right flasher bulb 230R is disposed in substantially symmetrical relation to the left flasher bulb 230L.

Specifically, the optical axis A1 extends to obliquely intersect the Front-Rear (F-R) direction in FIG.4. In other words, the optical axis A1 is outwardly oriented as compared with the fore-and-aft direction of the motorcycle 10.

FIG. 5 is a cross-sectional view taken along line F5-F5 of FIG. 4. As shown in FIG. 5, the left positioned louver 160L is disposed inside the front lens 120; specifically, inside the left flasher lens 122L. More specifically, the left louver 160L is disposed on the inner surface 120a of the left flasher lens 122L.

The left flasher bulb 230L attached to the headlight body 130 (specifically, the left flasher reflector 133L) is located to the rear of the louver 160L. The handlebar cover 190 covers the front lens 120 from above and below the front lens 120.

In the headlight unit 110, the louvers 160L, 160R that partition the respective flasher lenses 122L, 122R are disposed on the inner surface 120a of the flasher lenses 122L, 122R. Hence, each louver 160L, 160R attains adjustment of the luminous energy and the traveling direction of the light emitted from respective flasher bulbs 230L, 230R.

In other words, the headlight unit 110 attains adjustment of the luminous energy and the traveling direction of the light emitted from the flasher bulbs 230L, 230R without applying a machining ; e.g., forming predetermined projections and depressions, on the inner surface of the flasher lenses 122L, 122R.

Since the louvers 160L, 160R are disposed on the inner surface 120a of respective flasher lenses 122L, 122R, the louvers 160L, 160R can be located closer to the flasher bulbs 230L, 230R as compared with a configuration in which the louvers 160L, 160R are disposed on the outer surface (not shown) of the flasher lenses 122L, 122R.

Hence, adjustment of the luminous energy and the traveling direction of the light emitted from the flasher bulbs 230L, 230R is attained easily. In addition, the headlight unit 110; specifically, the flasher sections 110L, 110R, can be reduced in longitudinal size. Furthermore, since the louvers 160L, 160R can be located close to the flasher bulbs 230L, 230R, adjustment of the luminous energy and the traveling direction of the light emitted from the flasher bulbs 230L, 230R is attained effectively while reducing the louvers 160L, 160R in size.

Furthermore, since the louvers 160L, 160R are disposed on the inner surface 120a of the flasher lenses 122L, 122R, the louvers 160L, 160R are prevented from becoming dirty or damaged as compared with the configuration in which the louvers 160L, 160R are disposed on the outer surface (not shown) of the flasher lenses 122L, 122R. Improvement of the louvers 160L, 160R in weatherability is also attained.

In this embodiment, the headlight lens 121 and the flasher lenses 122L, 122R are formed integrally. Hence, the headlight unit 110 that includes the headlight section 110H and the flasher sections 110L, 110R is enhanced in the degree of being an integrated element.

In this embodiment, the louvers 160L, 160R have the plurality of plate portions 160a. Hence, adjustment of the luminous energy and the traveling direction of the light emitted from the flasher bulbs 230L, 230R is attained more easily and reliably.

In addition, the louvers 160L, 160R have the outer frame portion 160b that supports the plurality of plate portions 160a. Hence, attachment of the louvers 160L, 160R having the plurality of plate portions 160a to the headlight body 130 is facilitated.

In this embodiment, the optical axis A1 of the flasher bulbs 230L, 230R is oriented to extend obliquely forwardly from the motorcycle 10 while the headlight unit 110 is attached to the motorcycle 10. This causes flashing of the flasher bulbs 230L, 230R to be visually recognized even from an obliquely frontward direction of the motorcycle 10 without fail.

### Other Embodiments

Heretofore, while the invention has been described based on the embodiment shown in the drawings, it should be understood that the description and the drawings forming a part of this disclosure do not limit the scope of this invention. Alternative embodiments based on the disclosure will be apparent to those skilled in the art.

For example, in the aforementioned embodiment, the optical axis A1 of the flasher bulbs 230L, 230R is oriented to extend obliquely forwardly from the motorcycle 10. However, the optical axis A1 of the flasher bulbs 230L, 230R is not necessarily oriented to extend obliquely forwardly.

In the aforementioned embodiment, the louvers 160L, 160R have the outer frame portion 160b. However, the louvers 160L, 160R may not have the outer frame portion 160b.

In the aforementioned embodiment, the louvers 160L, 160R have two plate portions 160a. However, the number of the plate portion 160a may be of other than two. In addition, the plate portion 160a may be of a rod shape (a round rod or an angular rod shape). Furthermore, in the aforementioned embodiment, the plate portions 160a are disposed along the widthwise direction of the motorcycle. However, the plate portions 160a may be disposed along the vertical direction of the motorcycle 10. Also, one or more of the flat plate portions may be adjustable. This may allow the orientation of the light emitted to be adjusted.

Thus, as a matter of course, the invention includes various embodiments that are not described in this document. Hence, the technical scope of the present invention is defined only by particular matters of the invention as set forth in the appended claims reasonably understandable based on the description.

It should be understood that while the present invention has been described as having left and right directional indicator arrangements which are identical, the headlight apparatus may not be limited as such and may include a single directional indicator, ar two different directional indicators.

### Description of Reference Numerals and Symbols

- 10:: motorcycle
- 20:: front wheel
- 21:: front fork
- 40:: handlebar
- 50:: engine
- 70:: rear wheel
- 100:: handlebar assembly
- 110:: headlight unit (headlight apparatus)
- 110H:: headlight section
- 110L, 110R:: flasher section
- 120:: front lens
- 120a:: inner surface
- 121:: headlight lens
- 122L, 122R:: flasher lens
- 130:: headlight body
- 131, 132L, 132R, 133L, 133R:: reflector
- 140:: headlight bracket
- 150:: light-shielding wall
- 160L, 160R:: louver
- 160a:: plate portion
- 160b:: outer frame portion
- 190:: handlebar cover
- 210:: headlight bulb
- 220L, 220R:: position lamp
- 230L, 230R:: flasher bulb
- 240:: socket cover
- A1:: optical axis

## Claims

1. A headlight apparatus (110) comprising a directional indicator (110L, 110R) including:
a light source (230L, 230R) adapted to flash;
a directional indicator lens (122L, 122R) disposed forward of the light source (230L, 230R); and
a partition (160L, 160R) for partitioning the directional indicator lens (122L, 122R), wherein the partition (160L, 160R) is disposed on an inner surface of the directional indicator lens (122L, 122R).

2. The headlight apparatus (110) according to claim 1, further comprising a headlight (110H).

3. The headlight apparatus (110) according to claim 1 or 2, wherein the light source (230L, 230R) is adapted to flash at a predetermined intervals.

4. The headlight apparatus (110) according to claim 2 or 3, wherein the directional indicator (110L, 110R) is adjacent to the headlight (110H).

5. The headlight apparatus (110) according to claim 2, 3 or 4, wherein the headlight (110H) has a headlight lens (121) and the directional indicator lens (122L, 122R) and the headlight lens (121) are formed in one unit.

6. The headlight apparatus (110) according to any preceding claim, wherein the partition (160L, 160R) has a plate portion (160a) having a geometry of a substantially flat plate.

7. The headlight apparatus (110) according to claim 5, wherein the partition (160L, 160R has a plurality of the plate portions (160a).

8. The headlight apparatus (110) according to claim 6 or 7, wherein the partition (160L, 160R) further has an outer frame portion (160b) that supports the plate portion (160a).

9. The headlight apparatus (110) according to any preceding claim, wherein an optical axis (A1) of the light source (230L, 230R) is oriented to extend obliquely forwardly from a vehicle (10) while the headlight apparatus (110) is attached to the vehicle (10).

10. The headlight apparatus (110) of any preceding claim, comprising first and second directional indicators (110L, 110R) adapted to be positioned on respective right and left sides of a vehicle (10) in a vehicle width direction.

11. A vehicle (10) comprising a headlight apparatus (110) according to any one of claims 1 to 10.
